# EUROPEAN PATENT APPLICATION

(11) **EP 1 101 987 A1**
(43) Date of publication of application: **23.05.2001**
(21) Application number: 00125425.9
(22) Date of filing: 20.11.2000
(51) Int. Cl.: F16K 31/46, F16K 31/62, F16K 47/02

(54) **Foot-valve**

(30) Priority: 22.11.1999 KR 9951997
(71) Applicant: LEE, Jong-Gyun, Kwangju-city (KR)
(72) Inventor: LEE, Jong-Gyun, Kwangju-city (KR)
(74) Representative: Kern, Ralf M., Dipl.-Ing. Ralf M. Kern & Partner

(57) **Abstract**

The present invention relates to provide a water saving apparatus by driving a foot-valve, which enables to conveniently and quickly open or close a faucet according to a necessity by stepping a pedal with a foot while freely using two hands. The apparatus eliminates the water-wasting factor of the faucet, prevents the water resource wasting of the world that is being dried up, and reduces energy import and the air pollution generated by the energy waste. The water saving apparatus by using the foot-valve comprises a pedal member (13-1) for supplying or blocking the water provided from the outside by moving up and down a pressurized and interpolated steel wire (6). A metal hose (12) is connected and coupled with the pedal member, and is inserted and mounted the steel wire inside thereof. A packing shaft member (7-1) is operated according to the up and down movement of the steel wire connected and coupled with an end of the steed wire interpolated to the metal hose and the metal hose member. A packing shaft housing guides the up and down movement by interpolating of the packing shaft member. A valve body assembly (10) is accepted and fixed the packing shaft housing, is equipped a water-entrance for supplying water from the outside on a lateral side, and is mounted a water-outlet for discharging the supplied water from the water-entrance. And a metal hose-coupling member (12-1) fixes and couples the metal hose to the main body.

## Description

### BACKGROUND OF THE INVENTION

### 1. FIELD OF THE INVENTION

The present invention relates to a foot-valve driving-typed water saving apparatus for a faucet, which particularly keeps the essential function of a conventional faucet and is added or installed directly to a water pipe to open or close a water-switch of the faucet by a user necessity for saving water by stepping a pedal with a foot.

### 2. DESCRIPTION OF THE BACKGROUND ART

A water-switch apparatus of a conventional faucet is turned two handles by a hand for using due to the structure such as a screw-type, a ball-type or a cartridge-type, otherwise, the water-switch is raised up or pushed down a lever. Or a faucet opened or closed the water by an electronic sensor operated by motive power like electricity or a battery, etc. is used by touching with the hand or a foot.

However, there is a problem in using the conventional faucet. Operating the water opening or closing by the handle or the lever of the faucet, which is stained or slipped by food waste or soap bubbles on the user hands using two hands in a sink, causes the water waste.

There is another problem in using a shower tool during a bathing. The water switch of the conventional faucet causes lots of wasting water and energy because the quick water closing is not easy by the slippery hands due to the soap when soaping the two hands in washing hair.

There is still another problem with an electron detecting sensor faucet using a battery or electricity. The sensor is so comprised by a mechanical principle as to generate several inconvenient factors caused by a blackout or exchanging batteries due to a short battery life and by too many failures of the electronic components by humidity. And the factor induces the water and cncrgy waste.

### SUMMARY OF THE INVENTION

It is an object of the present invention to provide a water saving apparatus by driving a foot-valve, which enables to conveniently and quickly open or close a faucet according to a necessity by stepping a pedal with a foot while freely using two hands. The present invention eliminates the water-wasting factor of the faucet, prevents the water resource wasting of the world that is being dried up, and reduces energy import and the air pollution generated by the energy waste.

To achieve the above object, the water saving apparatus by using the foot-valve comprises a pedal member 13 for supplying or blocking the water provided from the outside by moving up and down a pressurized and interpolated steel wire. A metal hose 12 is connected and coupled with the pedal member, and is inserted and mounted the steel wire inside thereof. A packing shaft member 7-1 is operated according to the up and down movement of the steel wire connected and coupled with an end of the steed wire interpolated to the metal hose 12 and the metal hose member. A packing shaft housing 4 guides the up and down movement by interpolating of the packing shaft member. A valve body assembly 10 is accepted and fixed the packing shaft housing, is equipped a water-entrance for supplying water from the outside on a lateral side, and is mounted a water-outlet for discharging the supplied water from the water-entrance. And a metal hose-coupling member 12-1 fixes and couples the metal hose to the main body.

### BRIEF EXPLANATION OF THE DRAWINGS

The above objectives and advantages will become more apparent with explanation of the accompanying drawings:
FIG. 1 is a perspective view of a foot-valve;
FIG. 2 is a cross-sectional view showing a drainage-pressure preventing valve inserted/mounted to the upper part of a foot-valve main body assembly, and a connected and mounted state of a wire, a cable and a metal hose connected to a pedal assembly in the lower part of a valve body;
FIG. 3 is a perspective view showing an attached state of a foot-valve on a discharging-entrance of a conventional faucet;
FIG. 4 is a perspective view showing an attached shower tool on a foot-valve directly mounted to a water pipe;
FIG. 5 is an expanded perspective view of a valve assembly for preventing a drainage-pressure;
FIG. 6 is a cross-sectional view of a valve assembly for preventing a drainage-pressure;
FIG. 7 is a cross-sectional view of a valve body assembly;
FIG. 8 is a cross-sectional view of being inserted and mounted a metal hose assembly on a valve body assembly;
FIG. 9 is a cross-sectional view of a pausing state of a fool-valve faucet; and
FIG. 10 is a cross-sectional view of an operating state of a foot-valve faucet

### DETAILED DESCRIPTION OF THE INVENTION

An embodiment of the present invention will now be explained in detail with reference to the accompanying drawings.

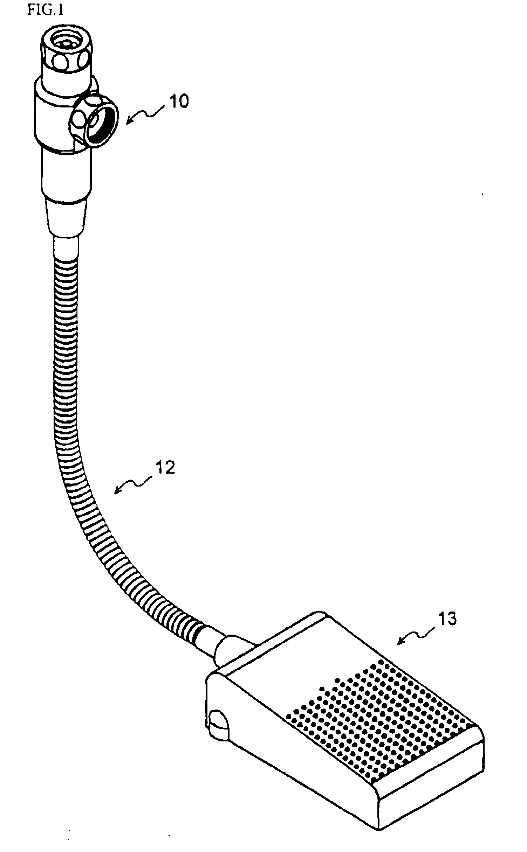

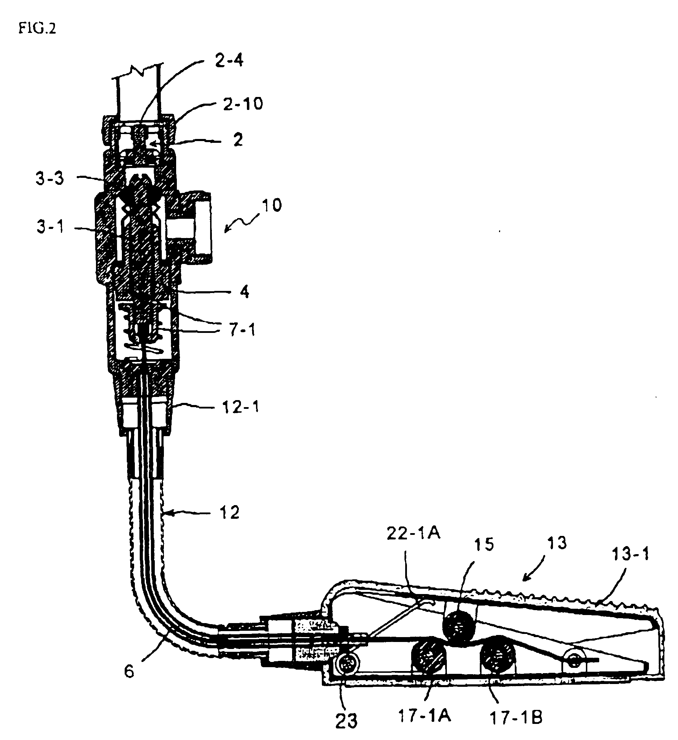

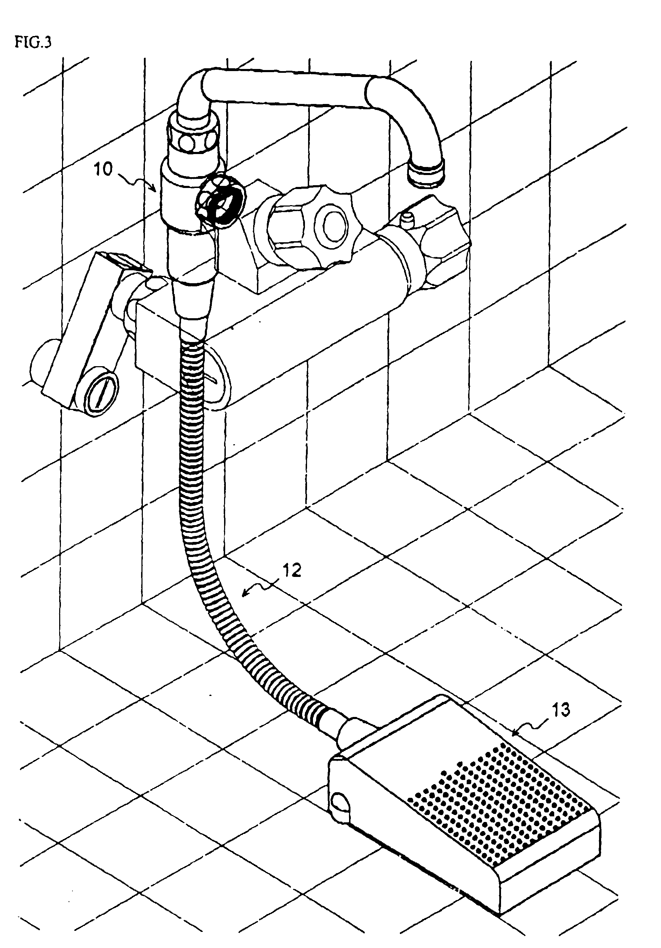

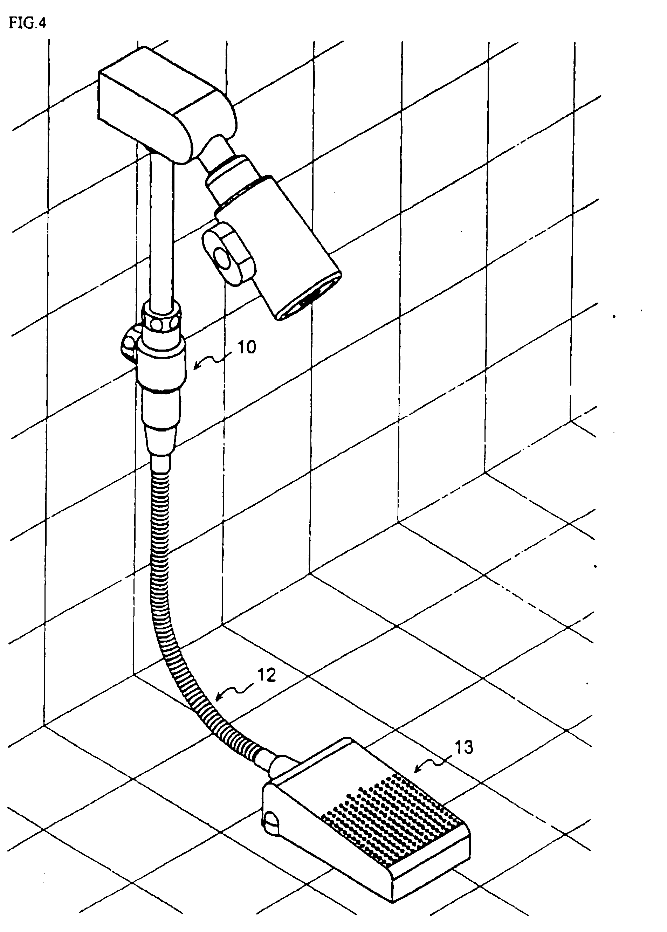

FIG. 1 is a perspective view of a foot-valve, FIG. 2 is a cross-sectional view showing a drainage-pressure preventing valve inserted/mounted to the upper part of a foot-valve main body assembly, and a connected and mounted state of a wire, a cable and a metal hose connected to a pedal assembly in the lower part of a valve body. FIG. 3 is a perspective view showing the attached state of the foot-valve on a discharging-entrance of a conventional faucet. FIG. 4 is a perspective view showing the attached shower tool on the foot-valve directly mounted to a water pipe. Referring to FIGs. 1 through 4, the foot-valve driving-typed water saving apparatus comprises a valve body assembly 10, a metal hose assembly 12 and a pedal assembly 13 for attaching to the conventional faucet like the shower tool or directly mounting to the water-pipe.

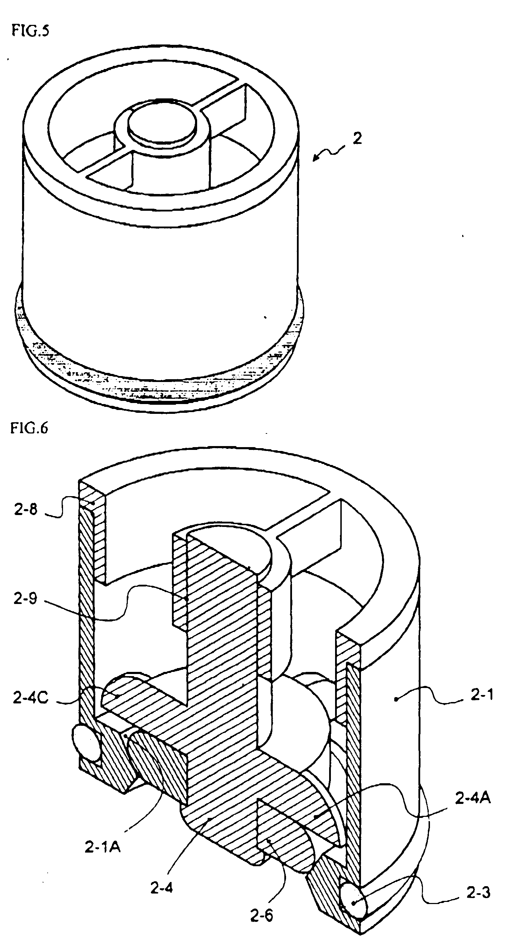

FIG. 5 is an expanded perspective view of the valve assembly for preventing the drainage-pressure. FIG. 6 is a cross-sectional view of the valve assembly for preventing the drainage-pressure. An O-ring 2-3 is equipped for blocking water leakage between the inside of the drainage-outlet and the drainage-pressure preventing valve assembly 2 when the drainage-pressure preventing valve assembly 2 of the present invention inserted and mounted to a discharging-outlet placed on the upper side of the valve body assembly 10 is tightly attached to the drainage uutlet, and flown or drained the water. A stopper-guiding cap 2-8 formed on the O-ring is provided not for shaking up and down the axis of a drainage-pressure stopper 2-4. The drainage-pressure stopper 2-4 is raised without any resistance for opening when opening a packing shaft 3 in the condition of water influx and flowing, and is going down by the drained water force inside the pipe for closing. A circular packing 2-6 is tightly attached to a circular packing guide 2-1A formed inside a stopper housing 2-1 and prevents a trembling condition of the packing shaft 3 caused by the drainage-pressure by completely blocking the drained water.

The drainage-pressure stopper 2-4 operates as a guide to prevent from trembling on shacking up and down by applying the stopper-movable member 2-9 on the central part of the stopper-guiding cap 2-8.

Anti-release frames 2-4A and 2-4C formed by projecting on the outside of the drainage-pressure stopper 2-4, controls to not release the circular packing 2-6 equipped under part of the drainage-pressure stopper 2-4 and completely blocks the drained water by closely adhering the circular packing guide 2-1A and the circular packing 2-6, together.

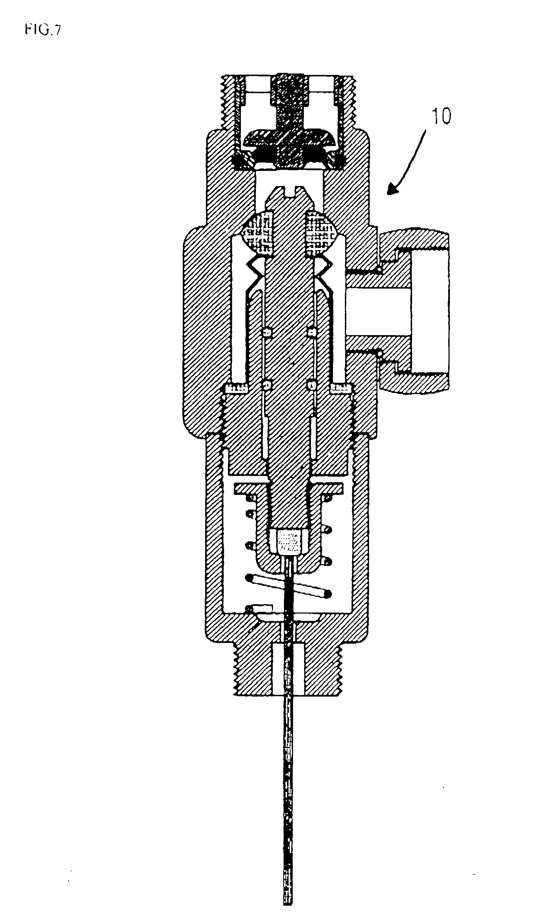

FIG. 7 is a cross-sectional view of the valve body assembly. Referring to FIG. 7, the valve body assembly 10 of the present invention comprises a vale body top section 1 inserted and mounted the drainage-pressure preventing valve assembly 2 to the drainage-outlet formed an external appearance; a joint nut 1-7 coupled on a lateral side of the valve body top section 1 and connected to the pipe-passage for supplying water from the outside; a packing shaft housing 4 coupled with the inside of the valve body top section 1 and equipped the packing shaft 3 inside thereof; a cap nut 5 mounted on the lower side of the packing shaft 3; a spring 9 for supporting the cap nut 5; and a valve body bottom section 8 formed an external appearance to be connected to the valve body top section I by coupling with the packing shaft housing 4.

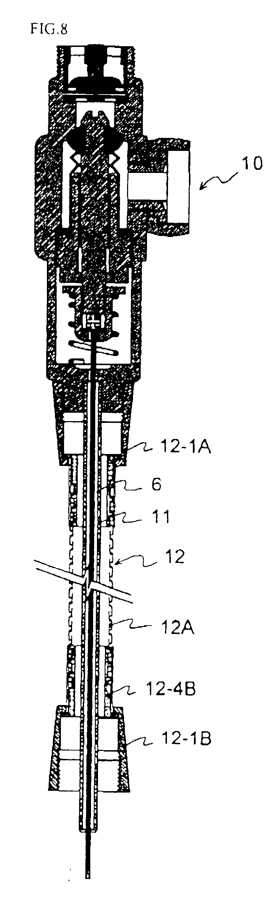

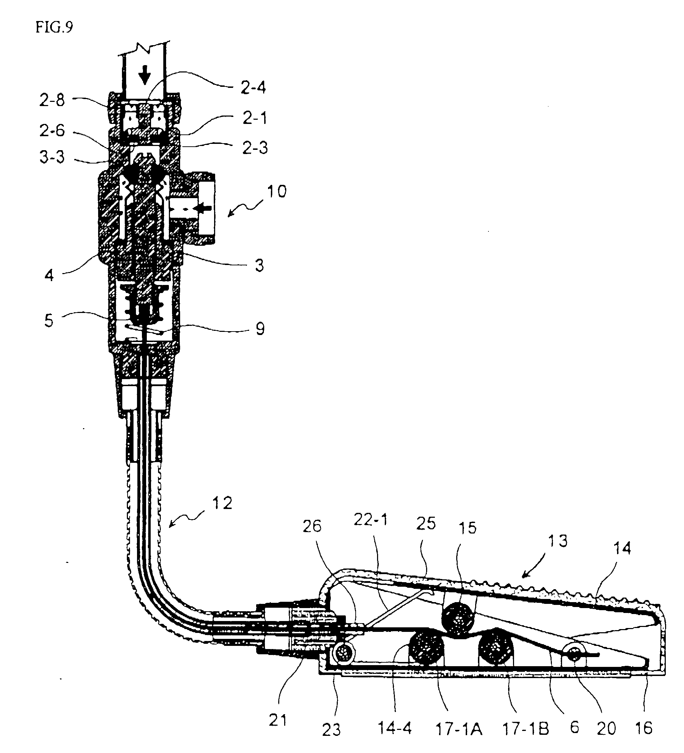

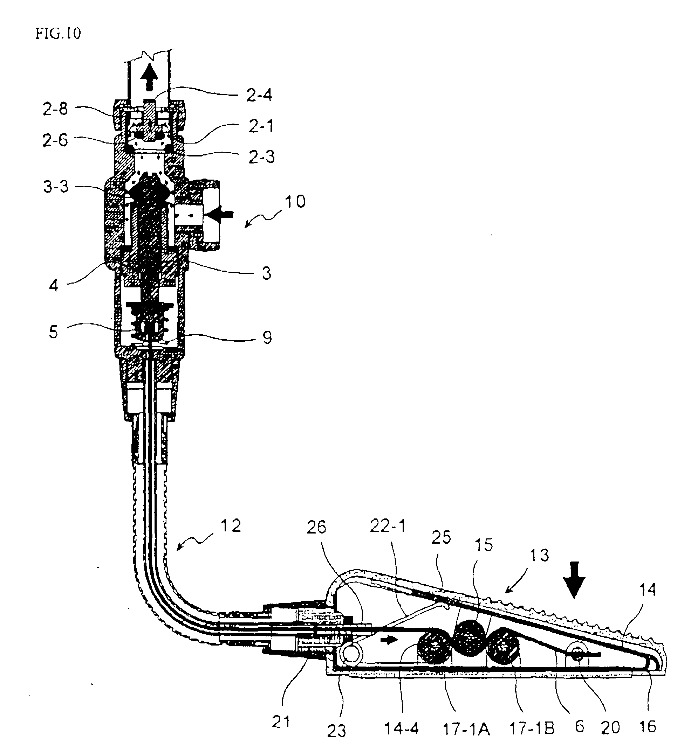

FIG. 8 is a cross-sectional view of being inserted and mounted a metal hose assembly on the valve body assembly. FIG. 9 is a cross-sectional view of a pausing state of the foot-valve faucet. And FIG. 10 is a cross-sectional view of an operating state of the foot-valve faucet.

Referring to FIGs. 8 through 10, the valve body assembly 10 is connected with a pedal assembly 13 through a metal hose assembly 12. A metal hose joint nut 12-1A is coupled with the valve body bottom section 8 in a state of that a cable 11 is wrapping a steel wire 6 connected to the packing shaft 3 mounted inside the valve body assembly 10. A metal hose 12A is mounted on the end of the metal hose joint nut 12-1A by a metal hose-fixing bolt 12-4B. The other end of the metal hose 12A connected to the valve body assembly 10 is coupled with the metal hose joint nut 12-1A connected to the pedal assembly 13 by the metal hose-fixing bolt 12-4B.

The metal hose assembly 12 comprises a steel wire 6 for transferring motive power to open or close a water-path by moving the packing shaft 3 when driving the pedal assembly 13; the cable 11 for wrapping the steel wire 6; the metal hose 12A wrapping the outer surface of the cable 11 and having a flexibility of making a curve and a supporting capacity toward an axial direction for transferring the motive power of the steel wire 6; the metal hose fixing bolt 12-4B for connecting the metal hose 12A to the metal hose joint nut 12-1A; and the metal hose joint nut 12-1A coupled with the valve body assembly 10 or the pedal assembly 13 and connected to the metal hose 12A by the metal hose-fixing bolt 12-4B.

The pedal assembly 13 for opening and closing the water-path is connected to the valve body assembly 10 by the metal hose assembly 12, and includes a cable housing 21 is mounted inside the metal hose joint nut 12-1A and wrapped the cable; a cable control lot 26 formed inside the cable housing 21 for controlling the elasticity of the steel wire 6 by adjusting the length of the cable 11; a twisting coil spring 22-1 for retrieving the pedal top section 14 to the original position when stepping off the pedal after using water by stepping on the pedal to transfer the motive power of the steel wire 6 for opening the water-path blocked by the packing shaft 3; a steel wire fixing bolt 20 for fixing the steel wire 6 inserted into the pedal assembly 13; a rotary roller 15 for pulling the packing shaft 3 by the steel wire 6 that is pressed when stepping on the pedal; bend-preventing rollers 17-1A and 17-1B for preventing the bend of the steel wire 6 pressed by the rotary roller 15; a small shaft 14-4 for fixing the rollers individually; pedal upper and lower sections 14 and 16 formed a pedal body and equipped said parts; and a pedal cover 25 having a projection on the surface for preventing a slipping.

Referring to FIG. 9, the packing shaft 3 blocks the water-path to prevent the water from going outside in the state of stopping the faucet and has a dome-typed packing 3-3 keeping air tightness not to leak the water.

Referring to FIG. 10, when a user steps on an upper part of the pedal to use water, the rotary roller 15 connected to the upper part of the pedal presses the steel wire 6. The steel wire 6 is bent by pressurizing between the bend-preventing rollers 17-1A and 17-1B and the rotary roller 15, and pulls the packing shaft 3 connected to the steel wire 6. At this time, the packing shaft 3 is come down and opens the water-path. Then the supplied water through the pipe-passage connected to the joint nut 1-7 pushes the drainage-pressure stopper 2-4 of the drainage-pressure preventing valve assembly 2 mounted on the water-path to the upper part, and passes the water to be used.

When stepping off the upper part of the pedal 14 after using water, the upper part of the pedal is retrieved to the original position by the elasticity of the twisting coil spring 22-1 elastically supporting the upper part of the pedal 14 and also the rotary roller 15 connected to the upper part of the pedal 14 is replaced to the original position.

When the rotary roller 15 is retrieved to the original position and the force pressing the steel wire 6 is removed, the packing shaft 3 is retrieved to the original position to block the water-path by the elasticity of the spring 9 mounted on the lower part of the cap nut 5 connected to the packing shaft 3. Then the steel wire 6 bent by pressurizing between the rotary roller 15 and the bend-preventing rollers 17-1A and 17-1B is released and keeps the original condition.

The foot-valve driving-typed water saving apparatus of the present invention opens and closes the faucet water with the foot while freely using two hands so as to reduce the wasting of water caused by user's ignorance or troublesome.

As described above, the present invention enables the user to open or close the faucet conveniently and quickly according to a necessity by stepping the pedal with the foot while freely using two hands. Therefore, the present invention eliminates the water-wasting factor of the conventional faucet, prevents the water resource wasting of the world that is being dried up, and reduces energy import and the air pollution generated by the energy waste.

While the present invention has been described herein with reference to particular embodiments thereof, latitude of modification, various changes and substitutions are intended in the foregoing disclosure. And in some instances, some features of the invention will be employed without a corresponding use of other features without departing from the spirit of the invention as set forth herein.

## Claims

1. A foot-valve driving-typed water saving apparatus, which enables to conveniently and quickly open or close a faucet by stepping a pedal with a foot while freely using two hands, the water saving apparatus comprising:
a pedal member for supplying or blocking the water provided from the outside by moving up and down a pressurized and interpolated steel wire;
a metal hose connected/coupled with the pedal member and inserted/mounted the steel wire inside thereof;
a packing shaft member operated according to the up and down movement of the steel wire connected and coupled with an end of the steed wire interpolated to the metal hose and the metal hose member;
a packing shaft housing for guiding the up and down movement by interpolating of the packing shaft member;
a valve body assembly accepted/fixed the packing shaft housing, equipped a water-entrance for supplying water from the outside on a lateral side, and mounted a water-outlet for discharging the supplied water from the water-entrance; and
a metal hose-coupling member for fixing/coupling the metal hose to the main body.

2. The water saving apparatus of claim 1, further comprising:
a drainage-pressure preventing valve mounted inside an upper part of a main body for preventing a damage or impact noise generation of the packing shaft member when draining water to the inside of the valve-body assembly; and
a valve-fixing member for fixing the drainage-pressure preventing valve.

3. The water saving apparatus of claim 1, wherein the pedal member comprises:
a steel wire fixing bolt connected/coupled with one side of the metal hose, and fixed/ fastened the steel wire interpolated to the metal hose by extending;
a rotary roller for moving up and down the steel wire by pressurizing;
two bend-preventing rollers for moving up and down the steel wire by pressurizing;
a twisting coil spring hinge-fixed by a main shaft for having a recovering force by displacing the rotary roller; and
a stepping case for accepting/having die steel wire fixing bolt, the rotary roller, the bend-preventing roller and the spring.

4. The water saving apparatus of claim 2, wherein the drainage-pressure preventing valve comprises:
a drainage-pressure stopper housing having a cylindrical shape;
a drainage-pressure stopper interpolated to the drainage-pressure stopper housing for moving up and down by water-pressure;
a circular packing member tightly attached on the outer surface of the bottom of the drainage-pressure stopper housing; and
a drainage-pressure stopper housing packing member formed on the outer surface of the drainage-pressure stopper housing.

5. The water saving apparatus of claim 1 or 2, wherein the packing shaft member comprises:
a cap nut connected/coupled a lower side with the steel wire and elastically supported by the spring mounted on the lower side;
a linear-typed packing shaft interpolated to the cap nut for moving up and down;
a dome-typed packing formed on a lateral side of the packing shaft; and
two O-rings coupled/formed along the outer surface of the packing shaft.
